(19) Europäisches Patentamt
European Patent Office
Office européen des brevets

(11) **EP 2 898 300 B1**

(12) **EUROPEAN PATENT SPECIFICATION**

(45) Date of publication and mention
of the grant of the patent:
**23.10.2019 Bulletin 2019/43**

(21) Application number: **13792426.2**

(22) Date of filing: **20.09.2013**

(51) Int Cl.:
*G01F 25/00* (2006.01)      *G01F 1/704* (2006.01)
*G01F 1/44* (2006.01)

(86) International application number:
**PCT/IB2013/002071**

(87) International publication number:
**WO 2014/045104 (27.03.2014 Gazette 2014/13)**

(54) **METHOD FOR DETERMINING THE ERROR OF A FLOW METER DURING NORMAL OPERATION WITHOUT DISCONNECTING IT FROM ANY PIPES**

EIN VERFAHREN ZUR BESTIMMUNG DER FEHLER EINES DURCHFLUSSMESSERS WÄHREND NORMALBETRIEB OHNE LEITUNGSUNTERBRECHUNG

PROCÉDÉ DE DÉTERMINATION DE L'ERREUR D'UN DÉBITMÈTRE PENDANT SON FONCTIONNEMENT NORMAL SANS LE DÉCONNECTER DES TUYAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2012 IT VI20120229**

(43) Date of publication of application:
**29.07.2015 Bulletin 2015/31**

(73) Proprietor: **Pietro Fiorentini S.p.A.**
**36057 Arcugnano (VI) (IT)**

(72) Inventors:
• **SICURO, Andrea**
  **35020 Ponte San Nicolo' (PD) (IT)**
• **ZANUCCO, Andrea**
  **30126 Lido di Venezia (VE) (IT)**

(74) Representative: **Marchioro, Paolo et al**
**Studio Bonini S.r.l.**
**Corso Fogazzaro, 8**
**36100 Vicenza (IT)**

(56) References cited:
**US-A- 3 881 351      US-A- 5 092 159**
**US-A- 5 594 179      US-A- 6 012 474**
**US-A1- 2011 303 019**

• **MORVILLE J ET AL: "Two schemes for trace detection using cavity ringdown spectroscopy", APPLIED PHYSICS B: LASERS AND OPTICS, SPRINGER INTERNATIONAL, BERLIN, DE, vol. 78, no. 3-4, 1 February 2004 (2004-02-01), pages 465-476, XP002691703, ISSN: 0946-2171, DOI: 10.1007/S00340-003-1363-8**

**Description**

The present invention concerns a system for measuring a gas flow rate in closed ducts using non-radioactive tracers.

Said measuring system is particularly suited to be used in a method for determining the indication error of flow meters, in particular the meters used in measurement systems installed in natural gas transport and distribution networks.

As is known, the measurement made by natural gas meters is used to optimize performance in transport and/or distribution networks or to issue invoices with legal validity for the quantities supplied to final users.

Flow meters of known type are disclosed e.g. in documents US 3 881 351, US 6 012 474 and US 2011/0303019. In particular, US 2011/0303019 discloses a method for measuring the error of a flow meter arranged along a duct in which a fluid mixture comprising oil, water and gas flows. Said method involves the use of a tracer which is fed into the duct, then said flow including the tracer is sampled, the concentration of said tracer is measured and processed so as to obtain second values of the flow rate of the oil and of the water and compare them to the values measured by the flow meter.

The law provisions and/or regulations in force in the different countries set a limit to the allowable measurement error for natural gas meters.

For example, according to European Directive 2004/22/CE said error must be included between 1% and 3% when the meter is tested at the factory before being marketed.

The document OIML 2CD R 137-1 & -2 indicates, for tests carried out during operation, a limit equivalent to twice those values.

In any case, said limits are set in order to ensure a minimum level of transparency:

- in the activities aimed at optimizing performance in gas transport and/or distribution networks in order to avoid the risk of leaving entire areas of the served territory without gas or with gas at excessively low pressures, and
- in trade to avoid the risk of measuring the quantities of supplied gas wrongly, getting a lower value than the value corresponding to the actual quantity of gas supplied, which would cause an economic damage to the distributor, or getting a higher value, which would cause an economic damage to the user.

However, during the use of the meter, its measurement error tends to increase, potentially exceeding the commonly allowable limits, due to the inevitable deterioration and/or ageing deriving from prolonged use, to the possible effects of imperfect installation on site, and to the action of atmospheric agents.

It is therefore necessary to check the meter both on first commissioning and successively at periodic intervals, in order to make sure that the actual measurement error remains within the allowed limits and to be able to take the appropriate corrective measures in case these limits are exceeded.

According to a known verification method, the meter is removed from the measuring unit and checked at the factory.

This method poses the drawback that it is necessary to replace the meter with another one, already tested, and therefore involves high costs for labour and labour management.

Furthermore, during the replacement of the meter in the measuring systems that are not provided with a second measuring line in parallel, it is necessary to temporarily interrupt the supply of gas, thus causing unbalance situations in the transport and/or distribution networks and considerable inconveniences to the users.

A further drawback posed by this method lies in that the error of the meter cannot be checked once the meter has been installed and this error may even be greater than the error found at the factory, due to the difference between laboratory conditions and the imperfect conditions of installation on site.

According to a further method for checking the performance of a meter, the system includes the possibility to install, for checking operations, a second reference meter in series with the meter to be checked, in such a way as to be able to compare the two measurements.

This method poses the drawback that it increases the complexity of the system, as it requires that the pipes of the measurement section are configured so that they make it possible to connect the two meters in series only during the check, which leads to an inevitable increase in the initial investment.

The drawbacks described above are overcome by checking the metering performance of the meter directly at the site of installation and under the actual conditions of installation, measuring the flow in the closed ducts through known principles based on the injection of a tracer gas in the duct where the natural gas flows, said principles being defined in the ISO 2975/I standard.

The tracer gas mixes with the natural gas and can be detected using a properly set external measuring system, thus making it possible to determine the flow rate of the natural gas.

It can thus be understood that this measuring system can be connected at the level of couplings arranged on the duct, which make it possible to connect and disconnect the system itself with no need to interrupt the supply of gas.

According to a first one of said methods, a tracer gas with radioactive isotopes is used.

Radioactivity sensors are used to measure the time needed by the gas to transit along a rectilinear duct length having a predefined cross section.

If the cross section and the size of the predefined length and the radioactive tracer gas flowing time are known, it is possible to calculate the volume flow rate of the gas.

Said method poses the drawback that it requires the use of a radioactive tracer gas, which is potentially dangerous.

Consequently, it is necessary to adopt special safety measures both during use and during transport to the site of installation, which make this method particularly expensive.

A further drawback posed by this method is represented by the demanding and complex authorization procedures related to the use and transport of radioactive substances.

Furthermore, the method requires the presence of a rectilinear duct length, with known inner cross section, which is not always available in the existing measuring systems.

According to a further known method based on the use of a tracer gas, the tracer gas is injected in the natural gas, a sample of the mixture made up of the two gases is extracted downstream of the injection point and the concentration of tracer gas in the mixture is measured, wherein said concentration value makes it possible to determine the flow rate of the natural gas that flows in the duct.

Compared to the previous method, this method allows inert tracer gases to be used, avoiding the drawbacks mentioned above and connected to the use of radioactive tracer gases.

However, the measurement precision obtained with this method depends on the precision of the measurements of all the process parameters, including the concentration and quantity of tracer gas injected, which are not simple to carry out.

In particular, in order for the check to be effective, it is necessary to guarantee that the maximum error of the measuring system is lower than the maximum error allowed for the meter.

It is therefore necessary that the measuring system is capable of determining with high precision both the quantity of tracer gas injected and its concentration in the natural gas.

This requisite is further complicated by the fact that the quantity of tracer gas injected must be considerably reduced compared to the flow rate of the natural gas, in order to both avoid altering the energy content of the natural gas, normally established by the provisions of the competent authorities, and limit the use of tracer gas, whose cost is not negligible.

Obviously, the lesser the percentage of tracer gas injected, the greater the difficulty in achieving precise measurements.

Consequently, the method described above poses the drawback that it does not allow measurements to be carried out that are sufficiently precise to be considered suitable for checking natural gas meters.

The present invention intends to overcome all the drawbacks of the known art outlined above.

In particular, it is the object of the present invention to provide a method for measuring the flow rate of a base gas flowing into a duct, in particular natural gas, which makes it possible to verify the measurement error of a meter installed in the duct with no need to remove it from the pipes and/or to interrupt the supply of gas to the users.

It is also the object of the invention to provide a measuring method that makes it possible to achieve a higher degree of precision compared to that granted by the known systems equivalent to it.

It is a further object of the invention to provide a measuring method that costs less than the systems of known type though achieving the same degree of precision.

It is another, yet not the least object of the invention, to provide a measuring method that is safer and easier to apply compared to the systems based on the use of radioactive tracers.

Said objects are achieved by a method for determining the error of a flow meter arranged along a duct, in accordance with claim 1.

Further details of the measuring method that is the subject of the invention are described in the related dependent claims.

Advantageously, the high precision, low cost and absence of risks offered by the measuring method that is the subject of the invention make the method itself suited to be used to verify errors made by natural gas meters installed in the measuring systems of transport and/or distribution networks.

Said objects and advantages, together with others which will be highlighted below, are illustrated in the description of a preferred embodiment of the invention which is provided by way of non-limiting example with reference to the attached drawings, wherein:

- Figure 1 shows a schematic view of the measuring system that is used for implementing the method of the invention;
- Figures 2 and 3 show a detail of the measuring system in two different operating configurations;
- Figure 4 shows an enlarged detail of Figure 3.

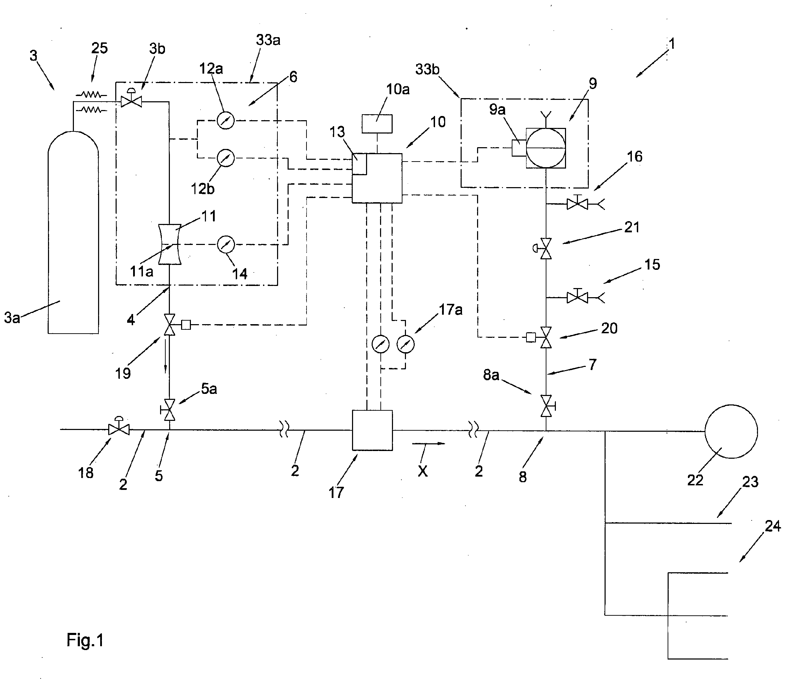

The measuring system that is used for implementing the method of the invention, indicated as a whole by 1 in Figure 1, makes it possible to measure the flow rate of a base gas that flows along a duct 2 under a predefined pressure towards a final user 22, or towards a further extension 23 of the target network, or towards a distribution network 24.

As can be observed further on, the measuring system 1 is particularly suited to be used to verify the error of a flow meter 17 arranged along the duct 2, in particular when the base gas is natural gas and the flow meter 17 is a gas meter.

It is evident, on the other hand, that the measuring system 1 can be used to measure the flow rate of any base gas in addition to natural gas.

As can be seen in Figure 1, the measuring system 1 comprises a feeding unit 3 that supplies a secondary gas at a given flow rate under given thermodynamic conditions of supply, wherein said secondary gas contains the tracer gas in a predefined fraction, preferably determined with a high degree of precision.

Since said degree of precision increases as the fraction of tracer gas in the secondary gas increases, said fraction of tracer gas is preferably high, even more preferably higher than 95%.

Preferably but not necessarily, said feeding unit **3** comprises a cylinder **3a** containing the secondary gas at a higher pressure than that present in the duct **2.**

The cylinder **3a** is associated with a pressure regulator **3b** that reduces the pressure of the secondary gas to the value required by the measuring system **1.**

The feeding unit **3** is connected to the duct **2** through a feeding duct **4** that introduces the secondary gas in the duct **2** at the level of an injection point **5** and that preferably comprises a solenoid valve **19** controlled by a processing unit **10.**

The solenoid valve **19** is preferably connected directly to the cutoff cock **5a** of the injection point **5** of the duct **2.**

The measuring system **1** also comprises a measuring unit **6** for determining the flow rate of the secondary gas that flows in the feeding duct **4.**

Once injected, the secondary gas mixes with the base gas.

A portion of said mixture is extracted through an extraction duct **7** communicating with the duct **2** at the level of an extraction point **8,** arranged downstream of the injection point **5** according to the flow direction **X** of the base gas.

The extraction duct **7** preferably comprises a solenoid valve **20** that is also controlled by said processing unit 10.

The extracted mixture is conveyed to a detector device **9** that is capable of determining the concentration of tracer gas in the mixture.

The data on the flow rate of the secondary gas and on the concentration of tracer gas in the mixture is supplied to the processing unit **10** that calculates the flow rate of the base gas.

The result of the calculation is made available to an operator through displaying means **10a** that can be integrated in the processing unit **10** or be separate and/or remote.

According to the invention, the feeding duct **4** comprises a nozzle **11** consisting of a converging portion that ends with a throat section **11a** having a minimum surface area and that is preferably followed by a diverging portion. Furthermore, the measuring unit **6** comprises a sensor unit **12a, 12b** suited to measure the thermodynamic parameters of the secondary gas corresponding to the thermodynamic conditions of supply.

Preferably, said sensor unit comprises a pressure sensor **12a** and a temperature sensor **12b** for the secondary gas, arranged upstream of the nozzle **11,** in a position in which the kinetic energy of the gas is substantially negligible compared to its enthalpy.

The measuring unit **6** also comprises means **13** for calculating the flow rate of the secondary gas introduced as a function of said thermodynamic parameters and of the predefined minimum surface area of the nozzle **11** in the event that the secondary gas reaches sound speed at the level of the throat section **11a.** According to the invention, the feeding unit **3** is arranged in such a way as to generate sonic flow conditions for the secondary gas at the level of the throat section **11a** of the nozzle **11.**

As is known from thermodynamics of fluids, sound speed of a given gas at the level of the throat section of a nozzle depends only on the energy of the gas upstream of the throat section, while it is independent of the thermodynamic conditions downstream of the throat section and therefore also of the pressure present therein.

Therefore, the flow rate of the secondary gas and, therefore, of the tracer gas that flow into the nozzle **11** in a sonic flow condition can be determined with less uncertainty compared to the results achievable with the measuring methods of known type, considering that in the presence of sonic flow said flow rate depends only on the thermodynamic conditions of supply of the secondary gas and on the surface area of the throat section **11a,** while it is completely independent of the thermodynamic conditions at the level of the injection point **5.**

Preferably, the feeding unit **3** comprises a cylinder **3a** at a sufficiently high pressure compared to the pressure of the base gas, such as to allow sonic speed to be achieved in the throat section **11a.**

It is thus possible to act on the pressure regulator **3b** until obtaining sonic flow conditions.

Preferably, the secondary gas is pre-heated upstream of the pressure regulator **3b** through a pre-heater **25,** in such a way that its temperature at the injection point is close to the temperature of the natural gas that flows in the duct **2,** which can be measured by instruments incorporated in or associated with the meter **17.**

Advantageously, said pre-heating step makes it possible to prevent an excessive reduction in the temperature of the secondary gas, due to the Joule Thompson effect following pressure reduction obtained through the pressure regulator **3b,** from causing phenomena of condensation of the gas itself.

As sonic speed in the throat section **11a** of the nozzle **11** is correlated to physical operating conditions that are easy to determine with a high degree of precision, said measuring system **1** makes it possible to determine the flow rate of the secondary gas and, consequently, of the base gas, more precisely than equivalent measuring systems of known type, thus achieving one of the objects of the invention.

Preferably, the measuring unit **1** comprises also a pressure sensor **14** configured so as to measure the secondary gas pressure in the throat section **11a** of the nozzle **11.**

The pressure sensor **14** is operatively associated with the processing unit **10,** which is configured to verify that sonic speed is reached in the throat section **11a.**

This check is performed by verifying that the ratio between the pressure at the inlet of the nozzle **11,** measured by the corresponding sensor **12a,** and the pressure in the throat section **11a** exceeds the minimum threshold that determines the generation of sonic conditions for the secondary gas actually used.

Advantageously, the check just described above guarantees that the measurement of the flow rate of the secondary gas takes place in sonic conditions, to the advantage of the reliability and precision of the system.

Among other things, this check makes it possible to avoid making the measurement during the transient regime immediately following the injection of the secondary gas in the duct **2,** during which the corresponding process parameters, like temperature and pressure, used to calculate the secondary gas flow rate are not stable.

For this reason, the processing unit **10** is preferably configured so as to calculate the flow rate of the base gas only once all the process parameters have stabilized, in particular the flow rate of the secondary gas.

This stabilization indicates that the secondary gas has reached a stable sonic condition in the throat section **11a.**

Regarding said minimum threshold for the pressure of the secondary gas determining sonic flow, it is preferably determined experimentally on site in the manner described below, so as to reflect the characteristics of the specific secondary gas used.

In fact, it should be specified that the formulas normally used refer to an ideal gas, while the secondary gases used in the method of the invention are not ideal gases.

Therefore, it can be understood that said experimental determination of the minimum pressure threshold makes it possible to detect with precision the actual achievement of the critical speed in the throat section **11a.**

Regarding the detector device **9** suited to measure the concentration of tracer gas in the drawn mixture, it is preferably of the optical type, suited to supply directly, through known methods, the molar concentration of the tracer gas itself, that is, the percentage of moles of tracer gas compared to the total number of moles in the mixture.

In particular, the detector device **9** comprises an optical emitter that produces a light beam comprising a frequency that is absorbed by the tracer gas to a degree depending on the presence of the latter in the mixture.

The detector device **9** also comprises a detector that receives the fraction of said light component that is not absorbed.

The emitter and the detector are operatively connected to control means **9a** that are configured to calculate, through known algorithms, the concentration of tracer gas in the mixture starting from said non-absorbed fraction. Regarding the tracer gas, this is preferably carbon dioxide ($CO_2$). Advantageously, carbon dioxide is particularly suited to be used as a tracer gas.

In fact, it is an inert gas and therefore poses no risks for safety, thus achieving one of the objects of the invention.

In particular, the use of carbon dioxide makes it possible to connect the measuring system **1** to a natural gas distribution system with no risks for the users **22.**

Furthermore, being an inert gas, carbon dioxide does not damage the various parts of the measuring system **1.**

Still advantageously, under the pressure conditions that are typical of natural gas distribution systems, carbon dioxide has an extremely low liquefaction temperature.

This prevents the tracer gas from condensing during the measuring process, as is the case, instead, of other gases, like for example steam, to the detriment of measurement reliability.

Regarding the optical emitter, this is preferably a laser device tuned in the near infrared spectral region (NIR).

The use of a laser device of the type just described above is particularly suitable for measuring the concentration of carbon dioxide, whose molecule has some well-defined radiation absorption bands in said spectral region.

Therefore, the NIR laser advantageously allows a very precise, quick, non-invasive measurement to be carried out without any contact with the gas, using optical analysers that adopt absorption spectroscopy techniques.

These high-precision analysers cost less than analysers having the same potential but using non- optical techniques, thus achieving the object to limit the cost of the measuring system **1.**

By way of indication, an optical technique using tunable laser devices that allows a very high degree of precision to be achieved when measuring concentration is the spectroscopy technique called "cavity ring down spectroscopy".

Obviously, variant embodiments of the invention can use any type of analyser, provided that it makes it possible to measure the concentration of tracer gas in the base gas in a sufficiently precise and quick manner.

Preferably but not necessarily, the extraction duct **7** comprises one or more breather valves **15, 16.**

Advantageously, said breather valves **15, 16** make it possible to rapidly discharge the gas contained in the extraction duct **7,** avoiding the need to discharge said gas through the detector device **9.**

Advantageously, this makes it possible to both reduce the stabilization time of the process data and minimize pollution of the laser system with gas mixtures that are not those taken at the extraction point **8,** thus reducing the time necessary to carry out the measurement.

The applicant filing this patent application has verified that the measuring system **1** described above makes it possible to achieve a degree of measurement precision that is higher than the degree of precision typically required of the natural gas meters commonly used in measurement systems. In fact, the error of the measuring system described above can reach values that are considerably lower than those normally accepted for natural gas meters, indicated for example in the already mentioned European Directive 2004/22/CE or in document OIML 2CD R 137-1 & -2, when applicable.

Therefore, it can be understood that the measuring system **1** is suited to be used to determine the error of a natural gas meter.

It is however evident that the measuring system **1** can be used to determine the error of any flow meter **17** connected to a duct **2** in which a base gas of any type flows.

In order to determine the measurement error of a generic flow meter **17,** for example for natural gas, the measuring system **1** is connected to the duct **2** at the injection point **5** and at the extraction point **8.**

Preferably, said connection is made using the cocks **5a** and **8a** of the duct **2,** respectively for the injection of the secondary gas and the extraction of the mixture, which advantageously make it possible to connect the measuring system **1** without any interference on the user **22** and/or the networks **23** and/or **24.**

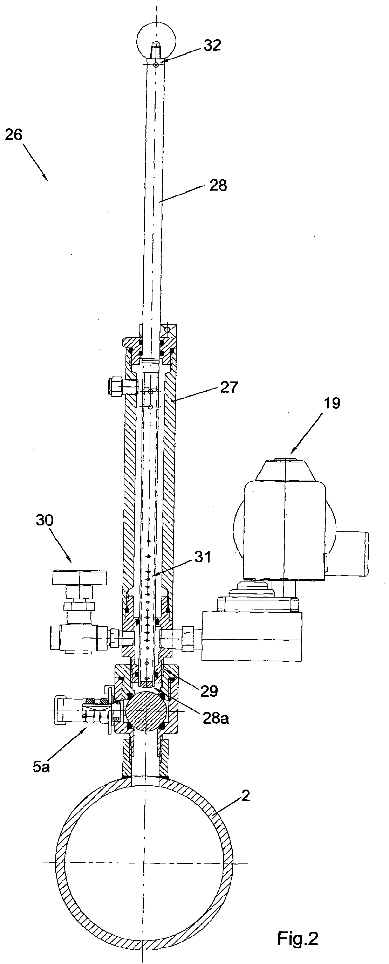

Preferably but not necessarily, the injection cock **5a** is connected to the solenoid valve **19** through the injection device **26** shown in Figure 2.

Said injection device **26** includes a tubular rod **27** with one end suited to be associated with the injection cock **5a,** for example through screw means **29.**

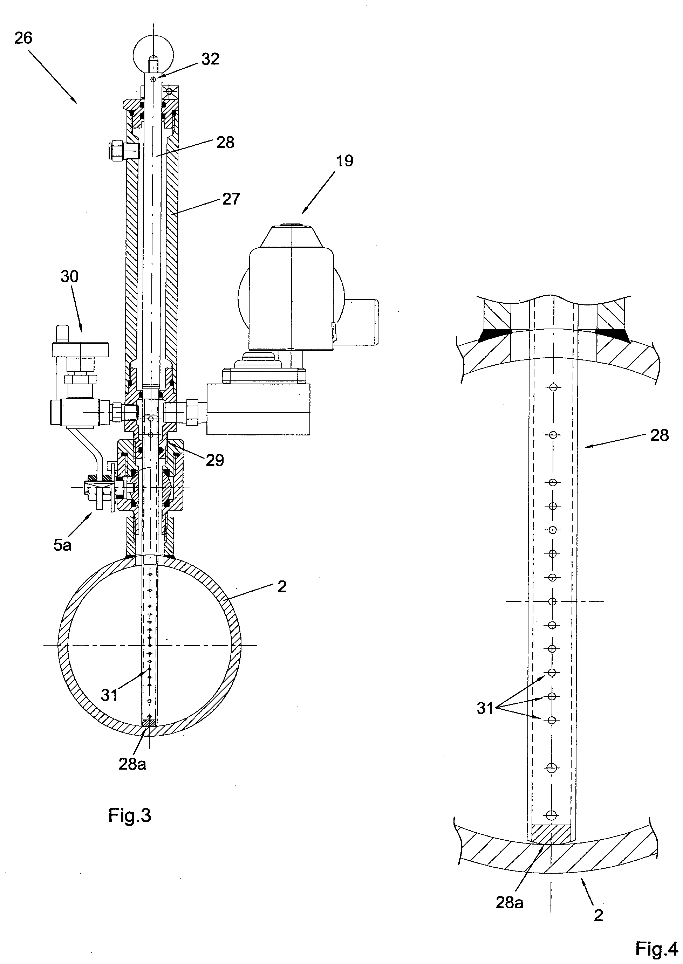

The injection device **26** also comprises an injection probe **28** for the secondary gas, slidingly coupled with the tubular rod **27** so that it can be introduced in the duct **2** through the injection cock **5a** when the latter is open, as shown in Figure 3.

The possibility to slide the probe **28** makes it possible to extract it from the rod **27** so as to arrange it through the entire diameter of the duct **2,** whatever the diameter.

Preferably, the injection device **26** incorporates the injection solenoid valve **19** mentioned above and a needle cock **30.**

The absence of leaks from said needle cock **30** in the open position with the solenoid valve **19** and the injection cock **5a** closed and with the side opposite the needle cock itself under pressure guarantees the inner tightness of both the valve **19** and the cock **5a.**

The inner tightness of the two valves **19** and **5a** ensures that the measurement of the concentration of tracer gas is not altered by internal leaks of the two valves **19** and **5a.**

Preferably, the injection probe **28** is provided with a plurality of inlet holes **31** distributed over a length that is equal to the inner diameter of the duct **2.** When the probe **28** is inserted in the duct **2,** said inlet holes **31** make it possible to obtain uniform distribution of the secondary gas and, therefore, of the tracer gas, in the entire mass of the natural gas that transits through the injection section of the duct **2.**

Preferably, the inlet holes **31** are thicker in the section of the probe **28** that is arranged in the centre area of the duct **2** than in the more external sections, as can be seen in detail in Figure 4.

Said arrangement of the inlet holes **31** makes it possible to introduce a higher flow rate of tracer gas at the level of the centre area of the duct **2,** where the base gas flows at higher speed than in the peripheral area, where the speed of the base gas is lower.

Advantageously, the introduction of the tracer gas as just described above makes it possible to distribute its flow rate proportionally to the flow rate of the base gas that transits in the different points of the duct, thus favouring the homogenization of the mixture obtained in this way.

Furthermore, preferably, the inlet holes **31** are aligned on the same longitudinal front of the probe **28** and are arranged on the side of the probe **28** facing upstream with respect to the flow direction **X** of the base gas.

Advantageously, the orientation of the holes **31** towards the direction of arrival of the base gas favours the mixing of the secondary gas, due to the turbulence present in the corresponding area of the injection probe **28.**

Still preferably, the lower end **28a** of the probe **28** is closed, so as to ensure that the secondary gas flows out only through the inlet holes **31.**

Advantageously, the injection probe **28** described above ensures uniform distribution of the secondary gas in the entire mass of the base gas.

This advantage is particularly important in the applications in which it is not allowed to inject the secondary gas at the level of turbulence areas in the system, for example immediately downstream of a pressure regulator, where the uniform mixing of the secondary gas would be facilitated.

Preferably, the injection probe **28** comprises an external indicator **32** that makes it possible to determine the orientation of the inlet holes **31** when the probe is inserted in the duct **2.**

Concerning the extraction of the mixture of base gas and tracer gas, an extraction device is preferably used that is analogous to the injection device **26** described above, suited to be associated with the extraction cock **8a** of the duct **2.**

Preferably, differently from the injection device **26,** the probe of the extraction device has the relative holes for the inlet of the gas mixture that are thicker at the level of the periphery of the duct **2** than in the centre area and facing upstream with respect to the flow direction **X.**

The extraction probe described above ensures higher reliability and precision of the measurement of the concentration of tracer gas, as it avoids the risk of obtaining a measured value that refers to a limited portion of said mixture, which may be different from that of other portions located in the duct at a different distance from the inner walls.

Said injection and extraction devices advantageously make it possible to connect the measuring system **1** without interferences on the users **22** and/or networks **23** and/or **24.**

Once the measuring system **1** has been connected, it is possible to start the measuring procedure.

It is then possible to compare the measured value of the quantity of gas obtained in this way against the value calculated by the flow meter **17,** in such a way as to determine the error of the latter.

Advantageously, said method makes it possible to carry out the check with no need to interrupt the supply of natural gas to the users **22** and/or the networks **23** and/or **24,** or to remove the flow meter **17** from the duct **2.**

Regarding the calculation of the flow rate of the base gas starting from the concentration of tracer gas, it is necessary to consider that the secondary gas generally contains, in addition to the tracer gas, a quantity, even if slight, of other gases that are not detected by the detector device **9.**

A further aspect to be taken in consideration is represented by the fact that the base gas may already contain among its components a fraction of a gas identical to the tracer gas, as is the case, for example, when the base gas is a natural gas and the tracer gas is carbon dioxide, which is already present in a certain quantity in natural gas.

Obviously, in the calculation of the flow rate of the base gas it is necessary to take into account both of the aspects illustrated above, as they obviously affect the overall concentration of tracer gas in the extracted mixture.

Therefore, by referring all the quantities to predefined reference thermodynamic conditions, like for example those indicated in the European Standard EN 12405-1, it can be easily shown that, in stationary flow conditions, the volume flow rate $Q_{Bi}$ of the base gas at a given instant can be expressed as a function of the volume flow rate $Q_{li}$ of the secondary gas injected at the same instant, through the following formula:

$$Q_{Bi} = Q_{li} \times \frac{C_l - C_{Pi}}{C_{Pi} - C_B} \tag{1}$$

where $C_B$ is the volume concentration of tracer gas intrinsically present in the base gas upstream of the injection point **5,** $C_1$ is the volume concentration of tracer gas in the secondary gas and $C_{Pi}$ is the overall volume concentration of tracer gas in the mixture extracted at the extraction point **8,** all referred to the same instant "i".

Analogously, the overall volume flow rate $Q_{Pi}$ of the mixture that reaches the extraction point **8,** always under the same reference thermodynamic conditions chosen, is equal to the sum of $Q_{Bi}$ and $O_{li}$, and can be expressed as:

$$Q_{Pi} = Q_{li} \times \left( \frac{C_l - C_{Pi}}{C_{Pi} - C_B} + 1 \right) \tag{2}$$

It can thus be understood that said formulas make it possible to calculate the volume flow rates respectively of the base gas $Q_{Bi}$ and of the mixture of base gas and secondary gas $Q_{Pi}$ according to the flow rate of the secondary gas $Q_{li}$ that is measured by means of the measuring unit **6,** and to the overall concentration of tracer gas $C_{Pi}$, which is measured by means of the detector device **9.**

As previously specified, said quantities with index "i", including the overall concentration of tracer gas $C_{Pi}$, are all expressed under the reference conditions selected and measured at the same instant "i" in conditions of stationary flow.

Regarding the concentrations $C_B$ and $C_l$ of tracer gas respectively in the base gas and in the secondary gas, the first one can be determined as specified further on below, while the second one is a characteristic of the selected secondary gas and, therefore, is assumed to be known.

It can be proven that the formulas mentioned above are valid even if the volume concentrations are replaced by the respective molar concentrations.

Therefore, the calculation procedure just explained above can be used as it is even if the detector device **9** gives, as output data, a molar concentration instead of a volume concentration, as in the case of an optical analyser of the type mentioned above.

Generally, the data supplied by the flow meters 17, in particular in the case of natural gas meters, does not express instant flow rates, rather volumes transited during a given time interval $\Delta t_i$, generally a few seconds.

Therefore, in order to be able to compare the values calculated by the measuring method of the invention through the previous formulas with the volumes supplied by the flow meter **17**, recalculated, however, under the selected reference conditions, it is necessary to determine the transited gas volumes, by multiplying the flow rate values that can be obtained from the formulas for $\Delta t_i$ and summing the values obtained in this way during the entire measurement interval that, as already explained, is in the order of a few minutes.

The previous formulas (1) and (2) thus become, respectively:

$$V_B = \sum_{i=1}^{n} Q_{li} \times \frac{C_l - C_{Pi}}{C_{Pi} - C_B} \times \Delta t_i \qquad (1')$$

$$V_P = \sum_{i=1}^{n} Q_{li} \times \left( \frac{C_l - C_{Pi}}{C_{Pi} - C_B} + 1 \right) \times \Delta t_i \qquad (2')$$

It is evident, however, that in variants of the invention the comparison between the measurement made by the detector device **9** and the measurement made by the flow meter **17** can be made based on any parameter correlated to the flow rate of the base gas, not necessarily on the volume flow rate or the volume transited in a given time interval.

Preferably, and as indicated in Figure 1, the injection point **5** and the extraction point **8** are respectively arranged upstream and downstream of the flow meter **17**, according to the flow direction **X** of the natural gas.

In this way, advantageously, the flow meter **17** favours the uniform mixing of the secondary gas with the base gas, so that the extracted mixture has a composition that is identical to that of the mixture flowing in the duct **2**.

In these cases, the gas volume that passes through the flow meter **17** during the measurement interval coincides with the gas volume that reaches the extraction point **8**, thus the volume calculated by the flow meter is compared with the volume calculated with the equation (2') shown above in the same time interval.

It is evident, however, that in variant embodiments of the invention the flow meter **17** can be arranged upstream of the injection point **5**, in which case the gas volume flowing through the flow meter **17** coincides with that reaching the injection point **5**.

In these cases, the volume calculated by the flow meter **17** is compared to the volume calculated with the equation (1') in the same time interval.

Finally, in the case where the flow meter **17** is arranged downstream of the extraction point **8**, the gas volume that flows through the flow meter is equal to the volume reaching the extraction point **8**, less the quantity collected in order to convey it to the detector device **9**.

As said extracted quantity is generally negligible compared to the quantity flowing through the flow meter **17**, it can be omitted from the calculation and therefore also in this case it is possible to use the equation (2').

In any case, it can be understood that it is possible to check the metering performance of the flow meter **17** without disconnecting it from the duct **2**.

When, as it usually happens, the measuring system **1** is arranged downstream of a natural gas pressure regulating unit, the injection point **5** is preferably arranged immediately downstream of a pressure regulator **18** belonging to said regulating unit.

In this case, it is not necessary to use the injection device **26**, as it is possible to exploit the turbulence present downstream of the regulator to favour the mixing of the tracer gas with the base gas.

Preferably, the processing unit **10** is configured so as to carry out a preliminary measurement of the concentration of tracer gas intrinsically contained in the base gas before starting the injection of the secondary gas in the duct **2**.

As already explained above, said preliminary measurement makes it possible to keep into account the intrinsic concentration of tracer gas in the successive calculation of the concentration of injected gas.

In particular, if the system is used to measure the flow rate of natural gas using carbon dioxide as tracer gas, it should be considered that the intrinsic volume concentration $C_B$ of carbon dioxide in natural gas is a parameter that is kept under control in order to guarantee its stability over time.

Advantageously, said stability makes it possible to assume that $C_B$ remains constant during the few minutes required for the execution of the measurement.

Preferably, the nozzle **11** and the thermodynamic conditions of supply of the secondary gas are arranged in such a way that the flow rate of the secondary gas introduced during the measurement interval does not exceed a value equal to a few percentage units of the flow rate of the base gas, preferably not more than 3%.

Advantageously, the limited percentage of secondary gas injected in the base gas for a limited time, in the order of a few minutes, avoids considerable alterations of the characteristics of the base gas itself, which may negatively affect the users **22.**

Still advantageously, the reduced use of secondary gas makes it possible to limit its consumption and the connected costs.

Preferably, the measuring unit **6** and/or the detector device **9** are arranged in protective containers **33a, 33b** suited to minimize the effects of ambient temperature variations and of any sun radiation on the components, considering that the measuring method of the invention is used on site.

Advantageously, said protective containers **33a, 33b** make it possible to reduce measurement uncertainty due to environmental effects like temperature and sun radiations, thus increasing reliability and precision as well as ensuring greater stability of process parameters.

In practice, the measuring procedure starts when the device **26** is connected to the injection cock **5a** and to the solenoid valve **19,** both arranged in the closed position.

Then it is necessary to make sure that there are no leaks from the needle cock **30** when in the open position.

As already mentioned previously, if the secondary gas is injected directly downstream of a pressure regulator **18,** the use of the injection device **26** is optional and the perfect inner tightness of the solenoid valve **19** can be checked using known alternative methods.

Successively, the extraction device is connected to the extraction cock **8a** and, once the latter cock has been opened, the corresponding extraction probe is positioned in the duct **2** in such a way as to occupy the entire diameter of the latter and with the extraction holes oriented towards the incoming gas. Successively, the system preferably carries out a preliminary measurement of the concentration in order to identify the possible presence of tracer gas in the base gas.

To do that, the extraction solenoid valve **20** is opened, so that a portion of the base gas flows towards the detector device **9.**

The pressure regulator **21** makes it possible to set the correct supply pressure for the detector device **9.**

The base gas needs a certain amount of time to reach the detector device **9,** said time being necessary for the gas previously contained in the extraction duct **7** to flow out through the detector device **9.**

To reduce this time, the breather valves **15, 16** can be temporarily opened, favouring the rapid emptying of the extraction duct **7** and its filling with the base gas.

Once said measurement of the concentration has been carried out, the injection solenoid valve **19** is opened, so as to start the injection of the secondary gas coming from the feeding unit **3.**

After a given transitory period, during which the flow rate of the injected gas increases progressively, the flow of the secondary gas in the throat section **11a** of the nozzle **11** becomes sonic and it is possible to start the measurement. The achievement of sonic flow is evidenced when the value of the ratio between the pressure measured upstream of the nozzle **11** by the pressure sensor **12a** and the pressure measured by the sensor **14** in the throat section **11a** exceeds the threshold value mentioned above.

Preferably, said threshold value is obtained experimentally from a test that, given the same pressure upstream of the nozzle **11,** checks that the pressure measured in the throat section by the sensor **14** remains constant as the pressure downstream of the same sonic nozzle decreases.

Obtaining the threshold value from said experimental test instead of from the formulas commonly used for perfect gases advantageously makes it possible to achieve a high degree of precision, considering that the secondary gas is a real gas and, as such, does not strictly follow the laws of perfect gases.

After the injection, it is necessary to wait for the mixture of base gas and secondary gas to reach the detector device **9.**

This event is detected by monitoring the value of the concentration of tracer gas that, after gradually increasing, reaches a substantially constant level. Once conditions of stability have been reached for all the process parameters, the concentration is measured for a time interval of a few minutes.

All the data are conveyed to the processing unit **10** that, through the formulas (1') and (2') indicated above, calculates the volumes of base gas that reach the injection point **5** and of the mixture of base gas and secondary gas that reach the extraction point **8** under the reference conditions for the entire measurement interval.

At the same time, also the volume of base gas calculated by the flow meter **17** is measured under the same reference conditions mentioned above.

At this point it is possible to compare the quantity of gas measured by the measuring system **1** with the quantity calculated by the flow meter **17,** in such a way as to determine the error of the latter.

If the error lies within the allowed limits, the measuring system **1** can be disconnected from the duct **2,** without causing problems to the users **22** and/or the transport network **23** and/or the distribution network **24.**

If, on the other hand, the error exceeds the allowable limits, the flow meter **17** can be re-conditioned or replaced.

Preferably, the concentration measurement described above is carried out maintaining the detector device **9** at environmental temperature and humidity values that are as close as possible, preferably equal, to those corresponding to the conditions under which the calibration curve of the device has been determined.

This advantageously allows any measurement errors to be minimized.

For this purpose, the measuring system **1** comprises environmental conditioning means, not illustrated herein but known per se, suited to maintain the detector device **9** exposed to predefined environmental temperature and humidity values.

Preferably, said environmental conditioning means are operatively connected to the protective container **33b** mentioned above, which contains the detector device **9,** thus making it easier to maintain the desired environmental conditions.

According to a variant embodiment of the invention, two or more calibration curves of the detector device **9** are determined, each corresponding to a respective pair of environmental temperature and humidity values.

Advantageously, said calibration curves make it possible to extrapolate further calibration curves of the detector device **9,** corresponding to specific environmental conditions that are different from those corresponding to the pre-determined calibration curves.

In particular, by measuring the values of the environmental temperature and humidity acting on the detector device **9** at a given instant, it is possible to extrapolate a calibration curve that is specific for the environmental conditions existing at the moment in which the concentration is measured.

For this purpose, the system **1** preferably comprises sensor means, not illustrated herein but known per se, configured so as to detect the environmental conditions to which the detector device **9** is exposed.

The calibration curve specific for said environmental conditions is determined according to the difference between the environmental temperature and humidity values measured and each one of the pairs of environmental temperature and humidity values corresponding to the pre-determined calibration curves.

To advantage, the extrapolation of a specific calibration curve for the detector device **9** makes it possible to obtain a precise measurement, with no need to condition the environment of the detector device **9** itself.

The above shows that the measuring system and the method for determining the measurement error described above achieve all the set objects.

In particular, as the measuring method of the invention does not require the use of dangerous tracer gases, it is safer than other systems of known type, for example than those based on radioactive gases.

Furthermore, the use of the sonic nozzle in the secondary gas feeding duct makes it possible to measure the flow rate of the latter with a high degree of precision and to maintain it stable over time more easily, allowing the quantity of base gas to be calculated with a high degree of precision.

Furthermore, the injection device described above makes it possible to inject the tracer gas so as to ensure the uniform distribution of the same on the entire mass of the incoming base gas, even in the cases where it is not possible to exploit turbulence areas of the duct to obtain uniform mixing results.

Again, the extraction device described above makes it possible to extract the mixture of base gas and secondary gas in such a way as to ensure that the composition of the extracted gas coincides with that of the mixture flowing in the duct, thus reducing the uncertainty of the measured value of the concentration of tracer gas and thus further increasing measurement precision. Furthermore, the use of $CO_2$ as tracer gas makes it possible to avoid inconveniences both for the final user and the equipment involved, at the same time making it possible to obtain an extremely precise measurement of the concentration using systems whose cost is relatively low, like optical systems. Furthermore, the use of tunable laser systems based on cavity ring down spectroscopy allows extremely precise measurements of tracer gas concentration to be obtained.

The high precision of the measuring method of the invention makes the method suited to be used for determining the error of flow meters directly in the installation ducts, thus allowing the impact of possibly imperfect installation on the metering performance of the flow meter to be evaluated.

Furthermore, the measuring system can be connected to the duct where the base gas flows with no need to interrupt the supply of base gas to the users and/or to the networks located downstream.

Further variant embodiments of the method of the invention, even though not described herein and not illustrated in the drawings, must all be considered protected by the present patent, provided that they fall within the scope of the following claims.

Where technical features mentioned in any claim are followed by reference signs, those reference signs have been included for the sole purpose of increasing the intelligibility of the claims and accordingly such reference signs do not have any limiting effect on the protection of each element identified by way of example by such reference signs.

**Claims**

1. Method for determining the error of a flow meter (17) arranged along a duct (2) in which a base gas flows, said method comprising the operation of connecting to said duct (2) a measuring system (1) for measuring the flow rate comprising:

    - a feeding unit (3) suited to supply a flow rate of a secondary gas under specific thermodynamic supply conditions and containing a tracer gas;
    - a feeding duct (4) interposed between said feeding unit (3) and said duct (2), suited to introduce said flow rate of secondary gas in said duct (2) at the level of an injection point (5) and comprising a nozzle (11) provided with a converging portion that ends with a throat section (11a) having a predefined minimum surface area;
    - a measuring unit (6) for measuring the flow rate of said secondary gas that flows in said feeding duct (4), comprising a sensor unit (12a, 12b) suited to detect said thermodynamic supply conditions and means (13) for calculating said flow rate of secondary gas according to said thermodynamic supply conditions and to said predefined minimum surface area in the event that said secondary gas reaches sound speed at the level of said throat section (11a);
    - an extraction duct (7) communicating with said duct (2) at the level of an extraction point (8) arranged downstream of said injection point (5) with respect to said flow direction (X), suited to extract from said duct (2) a portion of the mixture comprising said base gas and said secondary gas;
    - a detector device (9) suited to measure the concentration of said tracer gas in said mixture, connected to said extraction duct (7);
    - a processing unit (10) operatively connected to said measuring unit (6) and to said detector device (9) and configured so as to calculate said flow rate of said base gas according to said concentration of said tracer gas and to said flow rate of said secondary gas;

    wherein said feeding unit (3) is configured so that said secondary gas reaches sound speed at the level of said throat section (11a);
    wherein said method further comprises the following operations:

    - measuring said parameter representative of the flow rate of said base gas by means of said measuring system (1);
    - comparing said parameter representative of the flow rate with the corresponding parameter measured by said flow meter (17) in order to determine said error.

2. Method according to claim 1, **characterized in that** said measuring system (1) is associated with said duct (2) so that said injection point (5) is arranged upstream of said flow meter (17) and said extraction point (8) is arranged downstream of said flow meter (17) according to the flow direction (X) of said base gas.

3. Method according to any of the preceding claims, **characterized in that** said injection point (5) is arranged immediately downstream of a pressure regulator (18) arranged along said duct (2).

4. Method according to any of the preceding claims, **characterized in that** said processing unit (10) is configured so that it can carry out a preliminary measurement of the concentration before the introduction of said secondary gas in said duct (2), suited to measure a background concentration of said tracer gas intrinsically contained in said base gas.

5. Method according to any of the preceding claims, **characterized in that** said nozzle (11) and said thermodynamic supply conditions are arranged in advance so that said secondary gas flow rate does not exceed a value equal to 3% of said base gas flow rate.

6. Method according to any of the preceding claims, **characterized in that** said base gas is natural gas.

7. Method according to any of the preceding claims, **characterized in that** it comprises, before said measurement of said representative parameter, an operation of calibration of said detector device (9), suited to define a calibration curve of said detector device (9) exposed to predefined environmental temperature and humidity values.

8. Method according to claim 7, **characterized in that** said measurement of said representative parameter is performed with said detector device (9) exposed to environmental temperature and humidity corresponding to said predefined values.

9. Method according to claim 7, **characterized in that** said calibration includes the definition of at least two of said calibration curves, respectively corresponding to two different pairs of environmental temperature and humidity values, said measurement of said representative parameter comprising the following operations:

- measuring the environmental temperature and humidity values to which said detector device (9) is exposed;
- extrapolating a third calibration curve from said at least two calibration curves, based on the difference between said measured environmental temperature and humidity values and each one of the pairs of environmental temperature and humidity values corresponding to said at least two calibration curves;
- measuring the value of the concentration of said tracer gas in said base gas through said detector device (9) making reference to said third calibration curve.

10. Method according to any of the preceding claims, **characterized in that** said measuring system (1) comprises a pressure sensor (14) configured so as to measure the pressure in said throat section (11a), said processing unit (10) being configured to check that sound speed is reached in said throat section (11a) based on the pressure measured by said pressure sensor (14) and on said thermodynamic supply conditions.

11. Method according to any of the preceding claims, **characterized in that** said detector device (9) comprises an emitter of a light beam comprising at least one component suited to be at least partially absorbed by said tracer gas and a detector of the non-absorbed fraction of said component, operatively connected to control means (9a) configured to calculate said concentration based on said non-absorbed fraction.

12. Method according to claim 11, **characterized in that** said tracer gas is carbon dioxide and said light beam is a laser beam tunable in the infrared field.

13. Method according to any of the preceding claims, **characterized in that** said extraction duct (7) comprises at least one breather valve (15, 16).

14. Method according to any of the preceding claims, **characterized in that** said feeding duct (4) comprises a plurality of holes (31) arranged inside said duct (2) in such a way that they are thicker at the level of the centre area of said duct (2) than in the peripheral areas of said duct (2).

15. Method according to claim 14, **characterized in that** said feeding duct (4) has a closed end (28a) arranged in said duct (2).

## Patentansprüche

1. Verfahren zur Bestimmung des Fehlers eines entlang einer Leitung (2), in der ein Basisgas fließt, angeordneten Durchflussmessers (17), wobei das besagte Verfahren den Vorgang des Anschlusses an die besagte Leitung (2) eines Messsystems (1) zur Messung des Durchflusses umfasst, das Folgendes umfasst:

- eine Zuführeinheit (3), dazu geeignet, unter spezifischen thermodynamischen Zufuhrbedingungen einen Durchfluss eines ein Spurengas enthaltenden Sekundärgases zu liefern;
- eine zwischen der besagten Zuführeinheit (3) und der besagten Leitung (2) positionierte Zuführleitung (4), dazu geeignet, den besagten Durchfluss des Sekundärgases in die besagte Leitung (2) einzuleiten auf der Ebene eines Einspritzpunkts (5), und eine Düse (11) umfassend, die einen konvergierenden Abschnitt aufweist, der mit einem verengten Abschnitt (11a) mit einem vorbestimmten Mindest-Oberflächenbereich endet;
- eine Messeinheit (6) zur Messung des Durchflusses des besagten, in der besagten Zuführleitung (4) fließenden Sekundärgases, eine Sensoreinheit (12a, 12b) umfassend, die dazu geeignet ist, die besagten thermodynamischen Zufuhrbedingungen zu erfassen sowie Mittel (13) zur Berechnung des besagten Sekundärgas-Durchflusses den besagten thermodynamischen Zufuhrbedingungen und dem besagten vorbestimmten Mindest-Oberflächenbereich entsprechend, in dem Fall, dass das besagte Sekundärgas auf der Ebene des besagten verengten Abschnitts (11a) die Schallgeschwindigkeit erreicht;
- eine Entnahmeleitung (7), die auf der Ebene eines der besagten Flussrichtung (X) entsprechend stromabwärts des besagten Einspritzpunkts (5) angeordneten Entnahmepunkts (8) mit der besagten Leitung (2) kommuniziert, dazu geeignet, aus der besagten Leitung (2) einen Teil des das besagte Basisgas und das besagte Sekundärgas enthaltenden Gemischs zu entnehmen;
- eine an die besagte Entnahmeleitung (7) angeschlossene Erfassungsvorrichtung (9), dazu geeignet, die Konzentration des besagten Spurengases in dem besagten Gemisch zu messen;
- eine Verarbeitungseinheit (10), die operativ mit der besagten Messeinheit (6) und der besagten Erfassungsvorrichtung (9) verbunden ist und dazu konfiguriert ist, den besagten Durchfluss des besagten Basisgases entsprechend der besagten Konzentration des besagten Spurengases und des besagten Durchflusses des besagten Sekundärgases zu berechnen;

wobei die besagte Zuführeinheit (3) so konfiguriert ist, dass das besagte Sekundärgas auf der Ebene des besagten verengten Abschnitts (11a) die Schallgeschwindigkeit erreicht;
wobei das besagte Verfahren des Weiteren die folgenden Vorgänge umfasst:

- Messung des besagten, für den Durchfluss des besagten Basisgases repräsentativen Parameters durch das besagte Messsystem (1);
- Vergleich des besagten, für den Durchfluss repräsentativen Parameters mit dem entsprechenden, durch den besagten Durchflussmesser (17) gemessenen Parameter, um den besagten Fehler zu bestimmen.

2. Verfahren nach Patentanspruch 1, **dadurch gekennzeichnet, dass** das besagte Messsystem (1) so mit der besagten Leitung (2) verbunden ist, dass der besagte Einspritzpunkt (5) stromaufwärts des besagten Durchflussmessers (17) angeordnet ist und der besagte Entnahmepunkt (8) der Flussrichtung (X) des besagten Basisgases entsprechend stromabwärts des besagten Durchflussmessers (17) angeordnet ist.

3. Verfahren nach einem jeden der vorstehenden Patentansprüche, **dadurch gekennzeichnet, dass** die besagte Einspritzstelle (5) unmittelbar stromabwärts eines der besagten Leitung (2) entlang angeordneten Druckreglers (18) angeordnet ist.

4. Verfahren nach einem jeden der vorstehenden Patentansprüche, **dadurch gekennzeichnet, dass** die besagte Verarbeitungseinheit (10) so konfiguriert ist, dass sie vor der Einleitung des besagten Sekundärgases in die besagte Leitung (2) eine Vorabmessung der Konzentration ausführen kann, dazu geeignet, eine Hintergrundkonzentration des besagten, an sich in dem besagten Basisgas enthaltenen Spurengases zu messen.

5. Verfahren nach einem jeden der vorstehenden Patentansprüche, **dadurch gekennzeichnet, dass** die besagte Düse (11) und die besagten thermodynamischen Zufuhrbedingungen vorbestimmt werden, so dass der besagte Sekundärgas-Durchfluss einen Wert gleich 3% des besagten Basisgas-Durchflusses nicht übersteigt.

6. Verfahren nach einem jeden der vorstehenden Patentansprüche, **dadurch gekennzeichnet, dass** das besagte Basisgas Erdgas ist.

7. Verfahren nach einem jeden der vorstehenden Patentansprüche, **dadurch gekennzeichnet, dass** es vor der besagten Messung des besagten repräsentativen Parameters einen Vorgang der Kalibrierung der besagten Erfassungsvorrichtung (9) umfasst, dazu geeignet, eine Kalibrierungskurve der besagten Erfassungsvorrichtung (9), die vorbestimmten Werte von Umgebungstemperatur und -feuchtigkeit ausgesetzt ist, zu definieren.

8. Verfahren nach Patentanspruch 7, **dadurch gekennzeichnet, dass** die besagte Messung des besagten repräsentativen Parameters mit der besagten Erfassungsvorrichtung (9) erfolgt, die einer Umgebungstemperatur und -feuchtigkeit ausgesetzt ist, welche den besagten vorbestimmten Werten entsprechen.

9. Verfahren nach Patentanspruch 7, **dadurch gekennzeichnet, dass** die besagte Kalibrierung die Definition von wenigstens zwei der besagten Kalibrierungskurven umschließt, die jeweils zwei verschiedenen Wertepaaren der Umgebungstemperatur und -feuchtigkeit entsprechen, wobei die besagte Messung der besagten, repräsentativen Parameter folgende Vorgänge umfasst:

- Messung der Werte der Umgebungstemperatur und -feuchtigkeit, welchen die besagte Erfassungsvorrichtung (9) ausgesetzt ist;
- Extrapolation einer dritten Kalibrierungskurve aus den besagten wenigstens zwei Kalibrierungskurven, basierend auf der Differenz zwischen den besagten gemessenen Werten der Umgebungstemperatur und -feuchtigkeit und jedem der Wertepaare der Umgebungstemperatur und -feuchtigkeit, die den besagten wenigstens zwei Kalibrierungskurven entsprechen;

- Messung des Werts der Konzentration des besagten Spurengases in dem besagten Basisgas unter Bezugnahme auf die besagte dritte Kalibrierungskurve durch die besagte Erfassungsvorrichtung (9).

10. Verfahren nach einem jeden der vorstehenden Patentansprüche, **dadurch gekennzeichnet, dass** das besagte Messsystem (1) einen Drucksensor (14) umfasst, der dazu konfiguriert ist, den Druck in dem besagten verengten Abschnitt (11a) zu messen, wobei die besagte Verarbeitungseinheit (10) dazu konfiguriert ist, zu prüfen, ob in dem besagten verengten Abschnitt (11a) die Schallgeschwindigkeit erreicht wurde, basierend auf dem durch den besagten Drucksensor (14) gemessenen Druck und auf den besagte thermodynamischen Zufuhrbedingungen.

11. Verfahren nach einem jeden der vorstehenden Patentansprüche, **dadurch gekennzeichnet, dass** die besagte Erfassungsvorrichtung (9) einen Emitter eines Lichtstrahls umfasst, der wenigstens eine Komponente umfasst, welche geeignet ist, wenigstens teilweise durch das Spurengas absorbiert zu werden und einen Detektor des nicht absorbierten Anteils der besagten Komponente, der operativ mit Kontrollmitteln (9a) verbunden ist, die dazu konfiguriert sind, die besagte Konzentration auf Grundlage des besagten nicht absorbierten Anteils zu berechnen.

12. Verfahren nach Patentanspruch 11, **dadurch gekennzeichnet, dass** das besagte Spurengas Kohlendioxid ist, und der besagte Lichtstrahl ein Laserstrahl ist, der im infraroten Bereich einstellbar ist.

13. Verfahren nach einem jeden der vorstehenden Patentansprüche, **dadurch gekennzeichnet, dass** die besagte Entnahmeleitung (7) wenigstens ein Entlüftungsventil (15, 16) umfasst.

14. Verfahren nach einem jeden der vorstehenden Patentansprüche, **dadurch gekennzeichnet, dass** die besagte Zuführleitung (4) eine Vielzahl von Bohrungen (31) umfasst, die derart innerhalb der besagten Leitung (2) angeordnet sind, dass sie auf der Ebene des mittleren Bereichs der besagten Leitung (2) dicker sind als in den peripheren Bereichen der besagten Leitung (2).

15. Verfahren nach Patentanspruch 14, **dadurch gekennzeichnet, dass** die besagte Zuführleitung (4) ein geschlossenes Ende (28a) hat, das in der besagten Leitung (2) angeordnet ist.

## Revendications

1. Méthode pour déterminer l'erreur d'un débitmètre (17) disposé le long d'un conduit (2) dans lequel un gaz de base s'écoule, ladite méthode comprenant l'opération de raccordement d'un système de mesure (1) audit conduit (2) pour la mesure du débit comprenant:

- un groupe d'alimentation (3) apte à fournir un débit d'un gaz secondaire dans certaines conditions thermodynamiques spécifiques d'alimentation et contenant un gaz traceur;
- un conduit d'alimentation (4) interposé entre ledit groupe d'alimentation (3) et ledit conduit (2), apte à introduire ledit débit de gaz secondaire dans ledit conduit (2) à hauteur d'un point d'injection (5) et comprenant une buse (11) dotée d'une portion convergente qui se termine avec une section de gorge (11a) ayant une surface minimale prédéfinie;
- un groupe de mesure (6) apte à mesurer le débit dudit gaz secondaire qui s'écoule dans ledit conduit d'alimentation (4), comprenant une unité de capteur (12a, 12b) apte à détecter lesdits conditions thermodynamiques d'alimentation et moyens (13) pour calculer ledit débit de gaz secondaire selon lesdites conditions thermodynamiques d'alimentation et ladite surface minimale prédéfinie au cas où ledit gaz secondaire attendrait la vitesse du son à hauteur de ladite section de gorge (11a);
- un conduit d'extraction (7) communiquant avec ledit conduit (2) à hauteur d'un point d'extraction (8) disposé en aval dudit point d'injection (5) par rapport audit sens du débit (X), apte à extraire dudit conduit (2) une portion du mélange comprenant ledit gaz de base et ledit gaz secondaire;
- un dispositif de détection (9) apte à mesurer la concentration dudit gaz traceur dans ledit mélange, relié audit conduit d'extraction (7);
- un groupe d'élaboration (10) relié de manière opérationnelle audit groupe de mesure (6) et audit dispositif de détection (9) et configuré pour calculer ledit débit dudit gaz de base en fonction de ladite concentration dudit gaz traceur et dudit débit dudit gaz secondaire;

où ledit groupe d'alimentation (3) est configuré de manière à ce que ledit gaz secondaire atteint la vitesse du son à hauteur de ladite section de gorge (11a);

où ladite méthode comprend en outre les opérations suivantes:

- mesure dudit paramètre représentant le débit dudit gaz de base au moyen dudit système de mesure (1);
- comparaison dudit paramètre représentant le débit avec le paramètre correspondant mesuré par ledit débitmètre (17) afin de déterminer ladite erreur.

**2.** Méthode selon la revendication 1, **caractérisée en ce que** ledit système de mesure (1) est associé audit conduit (2) de manière à ce que ledit point d'injection (5) soit disposé en amont dudit débitmètre (17) et que ledit point d'extraction (8) soit disposé en aval dudit débitmètre (17) selon le sens du débit (X) dudit gaz de base.

**3.** Méthode selon l'une quelconque des revendications précédentes, **caractérisée en ce que** ledit point d'injection (5) est disposé immédiatement en aval d'un régulateur de pression (18) disposé le long dudit conduit (2).

**4.** Méthode selon l'une quelconque des revendications précédentes, **caractérisée en ce que** ledit groupe d'élaboration (10) est configuré de manière à exécuter une opération de mesure préliminaire de la concentration avant l'introduction dudit gaz secondaire dans ledit conduit (2), apte à mesurer une concentration de fond dudit gaz traceur intrinsèquement contenu dans ledit gaz de base.

**5.** Méthode selon l'une quelconque des revendications précédentes, **caractérisée en ce que** ladite buse (11) et lesdites conditions thermodynamiques d'alimentation sont décidées à l'avance de manière à ce que ledit débit de gaz secondaire ne dépasse pas une valeur égale à 3% dudit débit de gaz de base.

**6.** Méthode selon l'une quelconque des revendications précédentes, **caractérisée en ce que** ledit gaz de base est un gaz naturel.

**7.** Méthode selon l'une quelconque des revendications précédentes, **caractérisée en ce qu'**elle comprend, avant ladite opération de mesure dudit paramètre représentatif, une opération d'étalonnage dudit dispositif de détection (9), apte à définir une courbe d'étalonnage dudit dispositif de détection (9) exposé à des valeurs de température et d'humidité ambiantes préétablies.

**8.** Méthode selon la revendication 7, **caractérisée en ce que** ladite mesure dudit paramètre représentatif a lieu avec ledit dispositif de détection (9) exposé à une température et à une humidité ambiantes correspondant auxdites valeurs préétablies.

**9.** Méthode selon la revendication 7, **caractérisée en ce que** ladite opération d'étalonnage prévoit de définir au moins deux desdites courbes d'étalonnage, correspondant respectivement à deux différents couples de valeurs de température et d'humidité ambiantes, ladite mesure dudit paramètre représentatif comprenant les opérations suivantes:

- mesure des valeurs de la température e de l'humidité ambiantes auxquelles ledit dispositif de détection (9) est exposé;
- extrapolation d'une troisième courbe d'étalonnage desdites au moins deux courbes d'étalonnage, en fonction de la différence entre lesdites valeurs de température et d'humidité ambiantes mesurées et chacune des couples de valeurs de température et d'humidité ambiantes correspondant auxdites au moins deux courbes d'étalonnage;
- mesure de la valeur de la concentration dudit gaz traceur dans ledit gaz de base au moyen dudit dispositif de détection (9) en se référant à ladite troisième courbe d'étalonnage.

**10.** Méthode selon l'une quelconque des revendications précédentes, **caractérisée en ce que** ledit système de mesure (1) comprend un capteur de pression (14) configuré de manière à mesurer la pression dans ladite section de gorge (11a), ledit groupe d'élaboration (10) étant configuré pour vérifier que la vitesse de son soit atteinte dans ladite section de gorge (11a) en fonction de la pression détectée par ledit capteur de pression (14) et dans lesdites conditions thermodynamiques d'alimentation.

**11.** Méthode selon l'une quelconque des revendications précédentes, **caractérisée en ce que** ledit dispositif de détection (9) comprend un émetteur d'un faisceau lumineux comprenant au moins un composant apte à être absorbé au moins partiellement par ledit gaz traceur et un détecteur de la fraction non absorbée dudit composant, reliés de manière opérationnelle à des moyens de contrôle (9a) configurés pour calculer ladite concentration en fonction de ladite fraction non absorbée.

**12.** Méthode selon la revendication 11, **caractérisée en ce que** ledit gaz traceur est dioxyde de carbone et ledit faisceau lumineux est un rayon laser accordable dans le champ infrarouge.

**13.** Méthode selon l'une quelconque des revendications précédentes, **caractérisée en ce que** ledit conduit d'extraction (7) comprend au moins une soupape de purge (15, 16).

**14.** Méthode selon l'une quelconque des revendications précédentes, **caractérisée en ce que** ledit conduit d'alimentation (4) comprend une pluralité de trous (31) disposés à l'intérieur dudit conduit (2) de manière à ce qu'ils soient plus épais à hauteur de la zone centrale dudit conduit (2) par rapport aux zones périphériques dudit conduit (2).

**15.** Méthode selon la revendication 14, **caractérisée en ce que** ledit conduit d'alimentation (4) présente une extrémité fermée (28a) disposée dans ledit conduit (2).

Fig.1

Fig.2

Fig.3

Fig.4

**EP 2 898 300 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3881351 A
- US 6012474 A
- US 20110303019 A